# EUROPÄISCHE PATENTSCHRIFT

(11) **EP 0 782 896 B1**
(45) Veröffentlichungstag und Bekanntmachung des Hinweises auf die Patenterteilung: **07.07.1999**
(21) Anmeldenummer: 96117840.7
(22) Anmeldetag: 07.11.1996
(51) Int. Cl.: B23B 31/103, B24B 45/00

(54) **Spanneinrichtung zur Befestigung eines Werkzeugträgers an einer Spindel einer Werkzeugmaschine**
Clamping device for securing a tool holder onto the spindle of a machine tool
Dispositif d'abloquage pour la fixation d'un porte-outil à la broche d'une machine outil

(30) Priorität: 03.01.1996 DE 19600089
(43) Veröffentlichungstag der Anmeldung: 09.07.1997
(73) Patentinhaber: Klement, Klaus-Dieter, 52428 Jülich (DE)
(72) Erfinder: Klement, Klaus-Dieter, 52428 Jülich (DE)
(74) Vertreter: Albrecht, Rainer Harald, Dr.-Ing.

(56) Entgegenhaltungen:
- DE-A- 3 642 111
- DE-A- 4 110 720
- DE-U- 9 108 078
- US-A- 4 668 137
- US-A- 5 193 954

## Beschreibung

Die Erfindung betrifft eine Spanneinrichtung zur Befestigung eines Werkzeugträgers an einer Spindel einer Werkzeugmaschine, mit
einem in eine stirnseitige Ausnehmung einsetzbaren Hohlschaft mit einem endseitigen, nach innen vorspringenden Kragen,
einem Zugbolzen, der einen in den Hohlschaft eingreifenden Kopf sowie einen in eine Gewindehülse eingesetzten Gewindeabschnitt aufweist, und
einem Sperrelement mit radial beweglichen Sperrsegmenten, die bei einer Spannbewegung des Zugbolzens an einer Kegelfläche des Kopfes nach außen gleiten und den Kragen des Hohlschaftes hinterfassen.

Eine derartige Spanneinrichtung ist aus DE-C-4110720 bekannt.

Die Spanneinrichtung ist insbesondere für Schleifscheiben mit einem nabenförmigen Werkzeugträger vorgesehen. Der Werkzeugträger kann eine stirnseitige Ausnehmung aufweisen, die auf einen an die Spindel angeformten Hohlschaft aufsteckbar ist. Im Rahmen der Erfindung liegt es aber auch, daß der Hohlschaft an den Werkzeugträger angeformt und in eine entsprechende Ausnehmung der Spindel einführbar ist.

Bei der aus DE-C-41 10 720 bekannten Spanneinrichtung, von der die Erfindung ausgeht, ist die Gewindehülse drehbar in der Spindel gelagert und steht über eine Schrägverzahnung mit einem Ritzel im Eingriff. Das Ritzel ist in einer Querbohrung der Spindel angeordnet und seitlich zugänglich. Durch eine Betätigung des Ritzels ist der Zugbolzen axial verstellbar. Die seitlich zugängliche Zahnradanordnung für die Axialverstellung des Zugbolzens ist nicht frei von Nachteil. Durch die Querbohrung und das darin eingesetzte Ritzel entstehen bei hochtourigen Spindeln korrekturbedürftige Unwuchten. Die Querbohrung stellt ferner, insbesondere bei Spindeln mit kleinem Durchmesser, eine nicht unerhebliche Schwächung der Spindel dar. Schließlich ist die bekannte Anordnung in fertigungs- und montagetechnischer Hinsicht aufwendig.

Der Erfindung liegt die Aufgabe zugrunde, eine konstruktiv einfach aufgebaute Spanneinrichtung für hochtourige Spindeln, insbesondere zum Spannen von Schleifscheiben, anzugeben.

Die Aufgabe wird bei einer Spanneinrichtung des eingangs beschriebenen Aufbaus erfindungsgemäß dadurch gelöst, daß der Zugbolzen als zweiteiliges Bauteil aus einem von außen unmittelbar betätigbaren Gewindestift und einem drehfest in den Hohlschaft eingreifenden Kopfteil mit einer axialen Gewindebohrung besteht und daß der Gewindestift zwei Gewindeabschnitte mit gegenseitigen Gewinden aufweist, wobei ein Gewindeabschnitt in die Gewindebohrung des Kopfteils und der andere Gewindeabschnitt in die Gewindehülse eingreift. Die Gewindehülse ist fest in einer Ausnehmung der Spindel oder einer Ausnehmung des Werkzeugträgers angeordnet. Der Gewindestift ist in der Rotationsachse der Spindel angeordnet und an einer Stirnseite von außen zugänglich. Durch geeignete Spannwerkzeuge ist der Gewindestift unmittelbar betätigbar und dadurch das Kopfteil des Zugbolzens axial verstellbar.

Gemäß einer bevorzugten Ausführung der Erfindung ist das Kopfteil als Muffe mit einer durchgehenden axialen Gewindebohrung für den Gewindestift ausgebildet und weist die Muffe auf ihrem dem Kopf abgewandten rückwärtigen Ende einen Anschlußzapfen auf, der schiebebeweglich in eine stirnseitige Zapfenaufnahme der Gewindehülse eingreift. Das Kopfteil und die Gewindehülse sind zweckmäßig durch Formschluß des in die Zapfenaufnahme eingreifenden Zapfens drehfest miteinander verbunden. Zur Begrenzung der Stellbewegung des Zugbolzens weist das Kopfteil zweckmäßig einen Anschlagbund auf und ist auf dem der Gewindehülse zugeordneten rückwärtigen Ende des Gewindestiftes ein Anschlagring angeordnet.

In weiterer Ausgestaltung lehrt die Erfindung, daß auf dem Kopfteil eine Schiebehülse axial beweglich angeordnet und mittels einer Druckfeder an der Gewindehülse abgestützt ist, wobei die Schiebehülse und das Kopfteil einen Ringraum begrenzen, in dem die Sperrsegmente radial beweglich angeordnet sind. Vorzugsweise besteht das Sperrelement aus einer einstückigen Metallhülse, die einen geschlossenen endseitigen Ring, einen daran anschließenden dünnwandigen Mantelabschnitt mit stegbildenden Durchbrüchen und an die Stege angeformte Sperrsegmente aufweist, wobei der dünnwandige Mantelabschnitt auf dem Kopfteil verschiebbar angeordnet ist und die Sperrsegmente in den Ringraum einfassen. Die beschriebene Ausführung erlaubt eine Vormontage der Spanneinrichtung. Der Gewindestift, das Kopfteil, die Gewindehülse und das auf dem Kopfteil angeordnete Sperrelement bilden eine vormontierte Baugruppe, die in die stirnseitige Ausnehmung des Werkzeugträgers oder der Spindel einsetzbar ist. Zum Zwecke der Befestigung ist die Gewindehülse vorzugsweise mit einem Gewindezapfen ausgerüstet, der in eine zugeordnete Gewindebohrung der Spindel bzw. des Werkzeugträgers eingeschraubt werden kann.

Eine andere Ausführung der Erfindung sieht vor, daß das Kopfteil als Bolzen ausgebildet ist, der die Spindel in der Spindellängsachse durchfaßt und an seinem rückwärtigen Ende eine Sackbohrung mit einem Innengewinde zur Aufnahme des Gewindestiftes aufweist, und daß die Gewindehülse eine auf das Spindelende aufgesetzte Kappe ist, in der das Bolzenende des Kopfteils drehfest und schiebebeweglich geführt ist. Die Ausführung ermöglich eine Betätigung der Spanneinrichtung am Spindelende. Für die drehfeste Halterung des Bolzenendes enthält die Kappe vorzugsweise einen Führungsring, der in Längsnuten des Bolzenendes eingreifende leistenförmige Vorsprünge aufweist. Der Gewindestift ist frei zugänglich und weist an seiner freien Stirnseite eine Spannschlüsselaufnahme auf.

Im folgenden wird die Erfindung anhand einer lediglich ein Ausführungsbeispiel darstellenden Zeichnung ausführlich erläutert. Es zeigen schematisch
- Fig. 1: den Längsschnitt durch eine Spanneinrichtung zur Befestigung eines Werkzeugträgers an einer Spindel einer Werkzeugmaschine,
- Fig. 2 und 3: weitere Ausführungen der Spanneinrichtung, ebenfalls im Längsschnitt,
- Fig. 4: ein Sperrelement für die in den Fig. 1 bis 3 dargestellte Spanneinrichtung, in perspektivischer Darstellung.

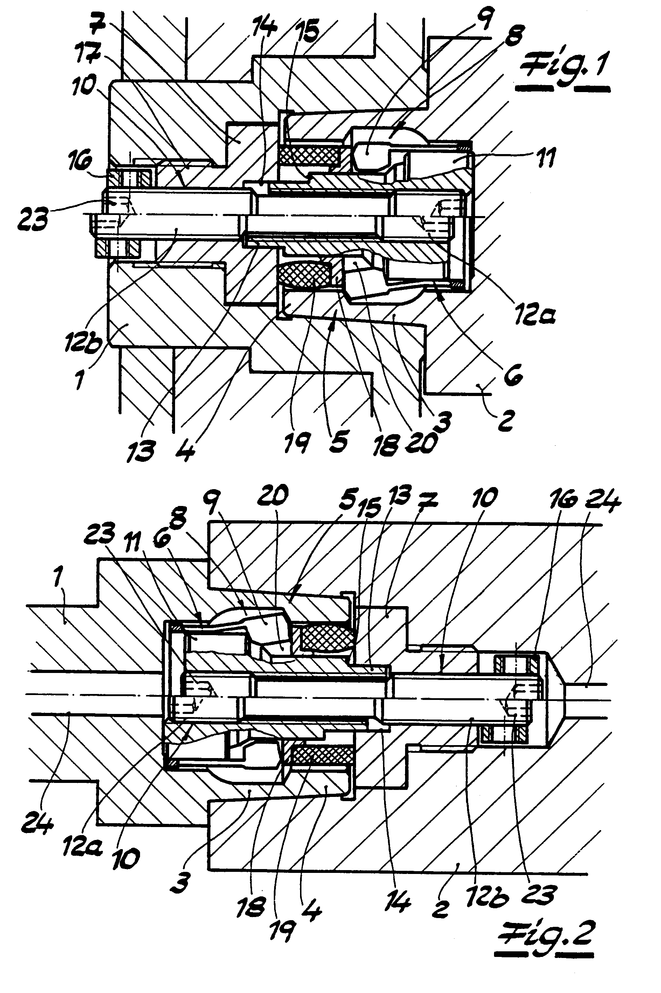

Die obere Hälfte der Fig. 1 bis 3 zeigt die Spanneinrichtung jeweils im gespannten, die untere Hälfte der Figuren die Spanneinrichtung im ungespannten Zustand.

Die Fig. 1 zeigt einen nabenförmigen Werkzeugträger 1 für eine Schleifscheibe, sowie den Anschlußbereich einer drehbar gelagerten, hochtourigen Spindel 2 einer Werkzeugmaschine. Der Anschlußbereich der Spindel 2 ist als Hohlschaft 3 ausgebildet, der in eine stirnseitige Ausnehmung des Werkzeugträgers 1 einsetzbar ist und einen endseitigen nach innen vorspringenden Kragen 4 aufweist. Durch eine Spanneinrichtung 5 ist der Werkzeugträger 1 spielfrei und mit vorgegebener Spannkraft auf dem Hohlschaft 3 der Spindel 2 festgesetzt. Zum grundsätzlichen Aufbau der Spanneinrichtung 5 gehören ein Zugbolzen 6 mit einem in den Hohlschaft 3 eingreifenden Kopf, eine Gewindehülse 7 sowie ein Sperrelement 8 mit radial beweglichen Sperrsegmenten 9, die bei einer Spannbewegung des Zugbolzens 6 an einer Kegelfläche des Kopfes nach außen gleiten und den Kragen 4 des Hohlschaftes 3 hinterfassen, wodurch dieser mit dem Zugbolzen 6 verriegelt wird. Der Zugbolzen 6 ist als zweiteiliges Bauteil ausgeführt und besteht aus einem von außen unmittelbar betätigbaren Gewindestift 10 und einem drehfest in den Hohlschaft eingreifenden Kopfteil 11 mit einer axialen Gewindebohrung. Der Gewindestift weist zwei Gewindeabschnitte 12a, 12b mit gegensinnigem Gewinde auf. Ein Gewindeabschnitt 12a greift in die Gewindebohrung des Kopfteils 11, der andere Gewindeabschnitt 12b in das Innengewinde der Gewindehülse 7 ein.

Bei der in Fig. 1 dargestellten Ausführung ist das Kopfteil 11 als Muffe mit einer durchgehenden axialen Gewindebohrung für den Gewindestift 10 ausgebildet. An ihrem dem Kopf abgewandten rückwärtigen Ende weist die Muffe einen Anschlußzapfen 13 auf, der schiebebeweglich in eine stirnseitige Zapfenaufnahme 14 der Gewindehülse eingreift. Durch Formschluß des in die Zapfenaufnahme 14 eingreifenden Anschlußzapfens 13 sind das Kopfteil 11 und die Gewindehülse 7 drehfest verbunden. Man erkennt ferner, daß das Kopfteil 11 einen Anschlagbund 15 aufweist und daß auf dem der Gewindehülse 7 zugeordneten rückwärtigen Ende des Gewindestiftes 10 ein Anschlagring 16 angeordnet ist. Der Anschlagbund 15 und der Anschlagring 16 begrenzen die Stellbewegung zwischen dem Kopfteil 11 und der Gewindehülse 7. Die Spanneinrichtung 5 bestehend aus dem Gewindestift 10, dem Kopfteil 11, der Gewindehülse 7 und dem auf dem Kopfteil 11 angeordneten Sperrelement 8 bilden eine vormontierte Baugruppe, die in die stirnseitige Ausnehmung des Werkzeugträgers 1 einsetzbar ist. Zur Befestigung weist die Gewindehülse 7 einen Gewindezapfen 17 auf, der in eine zugeordnete Gewindebohrung des Werkzeugträgers 1 eingeschraubt werden kann.

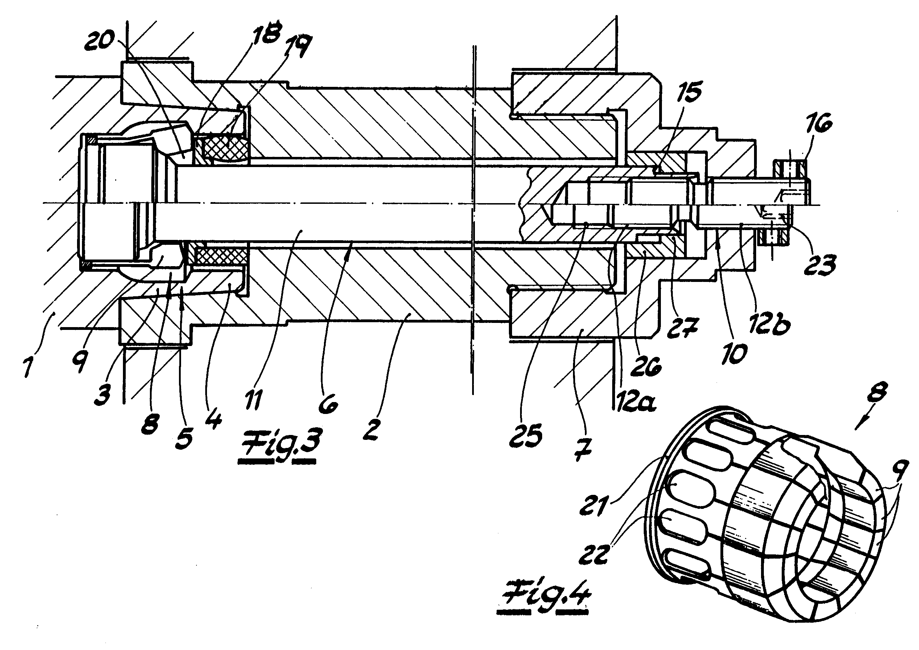

Aufbau und Funktion des Sperrelementes 8 werden aus einer vergleichenden Betrachtung der Fig. 1 und 4 verständlich. Auf dem Kopfteil 11 des Zugbolzens 6 ist eine Schiebehülse 18 axial beweglich angeordnet und mittels einer Druckfeder 19 an der Gewindehülse 7 abgestützt, wobei die Schiebehülse 18 und das Kopfteil 11 einen Ringraum 20 begrenzen. Das Sperrelement 8 besteht aus einer einstückigen Metallhülse, die einen geschlossenen Ring 21, einen daran anschließenden dünnwandigen Mantelabschnitt mit stegbildenden Durchbrüchen 22 und an die Stege angeformte Sperrsegmente 9 aufweist. Der dünnwandige Mantelabschnitt ist auf dem Kopfteil 11 des Zugbolzens 6 verschiebbar angeordnet, wobei die Sperrsegmente 9 in den Ringraum 20 einfassen. Die Sperrsegmente 9 bilden eine von schmalen Einschnitten durchbrochene Ringwulst.

Der gegen einen Anschlagbund der Spindel 2 gespannte Werkzeugträger 1 ist mit einer Durchgangsbohrung in der Rotationsachse ausgebildet, so daß der Gewindestift 10 von außen zugänglich ist. An seiner Stirnseite weist der Gewindestift 10 eine Spannschlüsselaufnahme 23 beispielsweise für einen Inbusschlüssel auf.

Bei der in Fig. 2 dargestellten Ausführung weist der Werkzeugträger 1 einen Hohlschaft 3 auf, der in eine stirnseitige Ausnehmung der Spindel 2 einsetzbar ist. Die Spanneinrichtung 5 hat den bereits beschriebenen Aufbau. Sie ist bei der in Fig. 2 dargestellten Ausführung in die Spindel 2 eingebaut, wobei der Gewindestift 10 durch eine Axialbohrung 24 des Werkzeugträgers und/oder durch eine Axialbohrung 24 von der Rückseite der Spindel zugänglich und betätigbar ist.

Einer vergleichenden Betrachtung der Fig. 1 und 2 entnimmt man, daß die Spanneinrichtung 5 als vormontierte Baugruppe bei unterschiedlichen Ausführungen der Spindel bzw. des Werkzeugträgers universell einsetzbar ist.

Bei der in Fig. 3 dargestellten Ausführung ist das Kopfteil 11 des Zugbolzens 6 als Bolzen ausgebildet, der die Spindel in der Spindellängsachse durchfaßt und an seinem rückwärtigen Ende eine Sackbohrung 25 mit einem Innengewinde zur Aufnahme des Gewindestiftes 10 aufweist. Die Gewindehülse 7 ist als Kappe ausgebildet, die auf das Spindelende aufsetzbar ist. Das Bolzenende ist in der Kappe drehfest und schiebebeweglich geführt. Zu diesem Zweck enthält die Kappe einen Führungsring 26, der in Längsnuten des Bolzenendes eingreifende leistenförmgie Vorsprünge 27 aufweist. Durch einen Anschlagbund 15 des Bolzenendes sowie durch einen Anschlagring 16 ist die Stellbewegung des Zugbolzens 6 begrenzt. Der Fig. 3 entnimmt man, daß der Gewindestift 10 von außen frei zugänglich ist und an seiner Stirnseite eine Spannschlüsselaufnahme 23 oder dergleichen zur Betätigung aufweist.

## Patentansprüche

1. Spanneinrichtung zur Befestigung eines Werkzeugträgers (1) an einer Spindel (2) einer Werkzeugmaschine, mit
einem in eine stirnseitige Ausnehmung einsetzbaren Hohlschaft (3) mit einem endseitigen, nach innen vorspringenden Kragen (4),
einem Zugbolzen (6), der einen in den Hohlschaft (3) eingreifenden Kopf sowie einen in eine Gewindehülse (7) eingesetzten Gewindeabschnitt aufweist, und
einem Sperrelement (8) mit radial beweglichen Sperrsegmenten (9), die bei einer Spannbewegung des Zugbolzens (6) an einer Kegelfläche des Kopfteils (11) nach außen gleiten und den Kragen des Hohlschaftes (3) hinterfassen,
**dadurch gekennzeichnet**, daß der Zugbolzen (6) als zweiteiliges Bauteil aus einem von außen unmittelbar betätigbaren Gewindestift (10) und einem drehfest in den Hohlschaft (3) eingreifenden Kopfteil (11) mit einer axialen Gewindebohrung besteht und daß der Gewindestift (10) zwei Gewindeabschnitte (12a, 12b) mit gegensinnigen Gewinden aufweist, wobei ein Gewindeabschnitt (12a) in die Gewindebohrung des Kopfteils (11) und der andere Gewindeabschnitt (12b) in die Gewindehülse (7) eingreift.

2. Spanneinrichtung nach Anspruch 1, dadurch gekennzeichnet, daß das Kopfteil (11) als Muffe mit einer durchgehenden axialen Gewindebohrung für den Gewindestift (10) ausgebildet ist und daß die Muffe auf ihrem dem Kopf abgewandten rückwärtigen Ende einen Anschlußzapfen (13) aufweist, der schiebebeweglich in eine stirnseitige Zapfenaufnahme (14) der Gewindehülse (7) eingreift.

3. Spanneinrichtung nach Anspruch 2, dadurch gekennzeichnet, daß das Kopfteil (11) und die Gewindehülse (7) durch Formschluß des in die Zapfenaufnahme (14) eingreifenden Anschlußzapfens (13) drehfest verbunden sind.

4. Spanneinrichtung nach Anspruch 2 oder 3, dadurch gekennzeichnet, daß das Kopfteil (11) einen Anschlagbund (15) aufweist und daß auf dem der Gewindehülse (7) zugeordneten rückwärtigen Ende des Gewindestiftes (10) ein Anschlagring (16) angeordnet ist, wobei der Anschlagbund (15) und der Anschlagring (16) Stellbewegungen zwischen dem Kopfteil (11) und der Gewindehülse (7) begrenzen.

5. Spanneinrichtung nach einem der Ansprüche 2 bis 4, dadurch gekennzeichnet, daß auf dem Kopfteil (11) eine Schiebehülse (15) axial beweglich angeordnet und mittels einer Druckfeder (19) an der Gewindehülse (7) abgestützt ist, wobei die Schiebehülse (18) und das Kopfteil (11) einen Ringraum (20) begrenzen, in dem die Sperrsegmente (9) radial beweglich angeordnet sind.

6. Spanneinrichtung nach Anspruch 5, dadurch gekennzeichnet, daß das Sperrelement (8) aus einer einstückigen Metallhülse besteht, die einen geschlossenen endseitigen Ring (21), einen daran anschließenden dünnwandigen Mantelabschnitt mit stegbildenden Durchbrüchen (22) und an die Stege angeformte Sperrsegmente (9) aufweist, wobei der dünnwandige Mantelabschnitt auf dem Kopfteil (11) verschiebbar angeordnet ist und die Sperrsegmente (9) in den Ringraum (20) einfassen.

7. Spanneinrichtung nach einem der Ansprüche 2 bis 6, dadurch gekennzeichnet, daß der Gewindestift (10), das Kopfteil (11), die Gewindehülse (7) und das auf dem Kopfteil (11) angeordnete Sperrelement (8) eine vormontierte Baugruppe bilden und daß die Gewindehülse (7) einen Gewindezapfen (17) aufweist, der zum Zwecke der Befestigung der Baugruppe in die stirnseitige Ausnehmung des Werkzeugträgers (1) oder der Spindel (2) einsetzbar ist.

8. Spanneinrichtung nach Anspruch 1, dadurch gekennzeichnet, daß das Kopfteil (11) als Bolzen ausgebildet ist, der die Spindel (2) in der Spindellängsachse durchfaßt und an seinem rückwärtigen Ende eine Sackbohrung (25) mit einem Innengewinde zur Aufnahme des Gewindestiftes (10) aufweist und daß die Gewindehülse (7) eine auf das Spindelende aufgesetzte Kappe ist, in der das Bolzenende des Kopfteils (11) drehfest und schiebebeweglich geführt ist.

9. Spanneinrichtung nach Anspruch 8, dadurch gekennzeichnet, daß die Kappe einen Führungsring (26) enthält, der in Längsnuten des Bolzenendes eingreifende leistenförmige Vorsprünge (27) aufweist.

10. Spanneinrichtung nach einem der Ansprüche 1 bis 9, dadurch gekennzeichnet, daß der Gewindestift (10) an zumindest einer Stirnseite eine Spannschlüsselaufnahme (23) aufweist.

## Claims

1. A chucking device for fixing a toolholder (1) to a spindle (2) of a machine tool, having
a hollow shank (3) which comprises an inwardly protruding collar (4) on its end face and which can be inserted in an end face recess,
a holding bolt (6), which comprises a head which fits into the hollow shank (3) and which also comprises a threaded section which is inserted in a threaded bushing (7),
a locking element (8) comprising radially movable locking segments (9) which on a chucking movement of the holding bolt (6) slide outwards along a tapered face of the head part (11) and engage behind the collar of the hollow shank (3),
characterised in that the holding bolt (6) consists, as a two-part component, of a threaded pin (10) which can be directly operated from the outside and of a head part (11) which has a threaded axial bore and which fits fixed in rotation into the hollow shank (3), and that the threaded pin (10) has two threaded sections (12a, 12b) with opposing threads, wherein one threaded section (12a) fits into the threaded bore of the head part (11) and the other threaded section (12b) fits into the threaded bushing (7).

2. A chucking device according to claim 1, characterised in that the head part (11) is constructed as a sleeve with a threaded axial through-hole for the threaded pin (10) and that on its rear end remote from the head the sleeve has a connecting pin (13) which fits, so that it can move by sliding, in an end face pin receiver (14) in the threaded bushing (7).

3. A chucking device according to claim 2, characterised in that the head part (11) and the threaded bushing (7) are joined fixed in rotation by the positive locking of the connecting pin (13) which fits into the pin receiver (14).

4. A chucking device according to claims 2 or 3, characterised in that the head part (11) has a stop collar (15) and that a stop ring (16) is disposed on the rear end of the threaded pin (10) which is associated with the threaded bushing (7), wherein the stop collar (15) and the stop ring (16) limit the adjusting movements between the head part (11) and the threaded bushing (7).

5. A chucking device according to any one of claims 2 to 4, characterised in that a sliding sleeve (15) is axially movably disposed on the head part (11) and is supported on the threaded bushing (7) by means of a pressure spring (19), wherein the sliding sleeve (18) and the head part (11) delimit an annular space (20) in which the locking segments (9) are radially movably disposed.

6. A chucking device according to claim 5, characterised in that the locking element (8) consists of a one-piece metal bushing which comprises a closed ring (21) on its end face, a thin-walled shell section which adjoins the closed ring and which comprises web-forming apertures (22) and locking segments (9) which are integrally formed on the webs, wherein the thin-walled shell section is displaceably disposed on the head part (11) and the locking segments (9) fit into the annular space (20).

7. A chucking device according to any one of claims 2 to 6, characterised in that the threaded pin (10), the head part (11), the threaded bushing (7) and the locking element (8) disposed on the head part (11) form a pre-assembled sub-assembly, and that the threaded bushing (7) comprises a threaded pin (17) which can be inserted in the end face recess in the toolholder (1) or in the spindle (2) for the purpose of fixing the sub-assembly.

8. A chucking device according to claim 1, characterised in that the head part (11) is constructed as a bolt which passes through the spindle (2) along the longitudinal axis of the spindle and which at its rear end has a blind hole (25) with an internal thread for receiving the threaded pin (10), and that the threaded bushing (7) is a cap which is placed on the spindle end and in which the bolt end of the head part (11) is guided so that can move by sliding but is fixed in rotation.

9. A chucking device according to claim 8, characterised in that the cap has a guide ring (26) which comprises strip-shaped projections (27) which fit into longitudinal grooves in the bolt end.

10. A chucking device according to any one of claims 1 to 9, characterised in that the threaded pin (10) has a chuck key receiver (23) on at least one end face.

## Revendications

1. Dispositif de serrage pour fixer un porte-outil (1) à une broche (2) d'une machine-outil, comprenant
une tige creuse (3) insérable dans un évidement frontal et munie d'un collet terminal (4) en saillie vers l'intérieur,
un boulon tirant (6) comportant une tête engagée dans la tige creuse (3) et une portion filetée logée dans un fourreau fileté (7), et
un élément d'arrêt (8) à segments d'arrêt mobiles radialement (9) qui, lors d'un mouvement de serrage du boulon tirant (6), glissent vers l'extérieur contre une surface conique de la partie de tête (11) et s'engagent derrière le collet de la tige creuse (3),
caractérisé en ce que le boulon tirant (6) est conçu sous la forme d'un élément structurel en deux parties constitué d'un fût fileté (10) actionné directement de l'extérieur et d'une partie de tête (11) engagée sans possibilité de rotation dans la tige creuse (3) et pourvue d'un taraudage axial, et en ce que le fût fileté (10) comporte deux portions filetées (12a, 12b) à filetages opposés, l'une des portions filetées, (12a), pénétrant dans le taraudage de la partie de tête (11) et l'autre portion filetée (12b) pénétrant dans le fourreau fileté (7).

2. Dispositif de serrage selon la revendication 1, caractérisé en ce que la partie de tête (11) est conçue sous la forme d'un manchon pourvu d'un taraudage axial débouchant pour le fût fileté (10), et en ce que, sur son extrémité arrière située à l'opposé de la tête, le manchon comporte un téton d'assemblage (13) qui pénètre par un mouvement coulissant dans un logement frontal de téton (14) du fourreau fileté (7).

3. Dispositif de serrage selon la revendication 2, caractérisé en ce que la partie de tête (11) et le fourreau fileté (7) sont solidarisés en rotation par complémentarité de formes du téton d'assemblage (13) engagé dans le logement de téton (14).

4. Dispositif de serrage selon la revendication 2 ou 3, caractérisé en ce que la partie de tête (11) comporte un épaulement de butée (15), et en ce qu'un anneau de butée (16) est disposé sur l'extrémité arrière du fût fileté (10) associée au fourreau fileté (7), l'épaulement de butée (15) et l'anneau de butée (16) délimitant des mouvements de réglage entre la partie de tête (11) et le fourreau fileté (7).

5. Dispositif de serrage selon l'une des revendications 2 à 4, caractérisé en ce qu'un fourreau coulissant (15) est disposé sur la partie de tête (11) avec une possibilité de déplacement axial et prend appui sur le fourreau fileté (7) au moyen d'un ressort de compression (19), le fourreau coulissant (18) et la partie de tête (11) délimitant un espace annulaire (20) dans lequel les segments d'arrêt (9) sont disposés avec une possibilité de déplacement radial.

6. Dispositif de serrage selon la revendication 5, caractérisé en ce que l'élément d'arrêt (8) est constitué d'un fourreau métallique d'un seul tenant qui comporte un anneau terminal fermé (21), une portion d'enveloppe à paroi mince qui le prolonge et est pourvue de découpes (22) formant des barrettes, et de segments d'arrêt (9) surmoulés sur les barrettes, la portion d'enveloppe à paroi mince étant montée coulissante sur la partie de tête (11) et les segments d'arrêt (9) s'engageant dans l'espace annulaire (20).

7. Dispositif de serrage selon l'une des revendications 2 à 6, caractérisé en ce que le fût fileté (10), la partie de tête (11), le fourreau fileté (7) et l'élément d'arrêt (8) disposé sur la partie de tête (11) forment un ensemble structurel prémonté, et en ce que le fourreau fileté (7) comporte un téton fileté (17) qui, pour fixer l'ensemble structurel, peut être inséré dans l'évidement frontal du porte-outil (1) ou de la broche (2).

8. Dispositif de serrage selon la revendication 1, caractérisé en ce que la partie de tête (11) est conçue sous la forme d'un goujon qui traverse la broche (2) selon l'axe longitudinal de celle-ci et comporte, à son extrémité arrière, un trou borgne (25) pourvu d'un taraudage pour loger le fût fileté (10), et en ce que le fourreau fileté (7) est une coiffe qui est rapportée sur l'extrémité de la broche et dans laquelle l'extrémité de goujon de la partie de tête (11) est guidée de manière solidaire en rotation et coulissante.

9. Dispositif de serrage selon la revendication 8, caractérisé en ce que la coiffe renferme un anneau de guidage (26) comportant des saillies en forme de languettes (27) qui pénètrent dans des rainures longitudinales de l'extrémité du goujon.

10. Dispositif de serrage selon l'une des revendications 1 à 9, caractérisé en ce que, sur au moins une de ses faces frontales, le fût fileté (10) comporte un logement pour clé de serrage (23).
